# EUROPEAN PATENT APPLICATION

(11) **EP 3 447 646 A1**
(43) Date of publication of application: **27.02.2019**
(21) Application number: 16899425.9
(22) Date of filing: 21.04.2016
(51) Int. Cl.: G06F 12/00, G06F 12/02, G06K 7/10

(54) **WRITE CONTROL PROGRAM, WRITE CONTROL DEVICE, AND WRITE CONTROL METHOD**

(71) Applicant: Fujitsu Frontech Limited, Inagi-shi, Tokyo 206-8555 (JP)
(72) Inventor: SHIMADA, Tsuyahiko, Maebashi-shi Gunma 371-0024 (JP)
(74) Representative: Hoffmann Eitle
(86) International application number: PCT/JP2016/062635
(87) International publication number: WO 2017/183153

(57) **Abstract**

A write request for writing first data (11a) into a first region (11) in a memory region (10) of a memory device and a write request for writing second data (12a) into a second region (12) are acquired. When the two regions are not continuous, a first estimated time is calculated by summing an estimated time for writing the first data (11a) into the first region (11) and an estimated time for writing the second data (12a) into the second region (12). In addition, a second estimated time for writing third data (14a) including the first data (11a), the second data (12a), and additional data (13a) into a third region (14) including the first region (11), the second region (12), and a gap region (13) is calculated. When the second estimated time is shorter than the first estimated time, the first data (11a), the second data (12a), and the additional data (13a) are controlled to be written at a time.

## Description

### Technical Field

The embodiments discussed herein relate to a write control program, a write control apparatus, and a write control method which are capable of improving data write speed.

### Background Art

A radio frequency identification (RFID) system (a communication system using RFID technology) utilizes an RFID tag (hereinafter, referred to as a tag) and a reader/writer device.

In the RFID system, the reader/writer device wirelessly communicates with the tag in order to write data into a memory region of the tag and read data from the memory region. In such an RFID system, it is desirable that the reader/writer device writes data into the memory region of the tag and reads data from the memory region at a higher speed.

For example, there is a proposed technology of writing a plurality of data sets to be written into continuous addresses (continuous regions) of a memory region in a single process (write processing), as a technology for writing data at a higher speed (for example, refer to Patent Literature 1).

### Citation List

### Patent Literature

PTL1: Japanese Laid-open Patent Publication No. 2006-514386

### Summary of Invention

### Technical Problem

However, the above technology is unable to speed up the write speed, when the plurality of data sets are not written into continuous regions in the memory region (when the plurality of data sets are written into noncontinuous regions).

The present embodiments are made in consideration of the above problem, and has a purpose to provide a write control program, a write control apparatus, and a write control method which are capable of improving data write speed.

### Solution to Problem

In order to solve the above problem, a computer program for write control causing a computer to perform the following procedure is provided. The computer program for write control causes a computer to perform a procedure including: acquiring a write request for writing first data into a first region in a memory region of a memory device and a write request for writing second data into a second region; calculating a first estimated time by summing an estimated time for writing the first data into the first region and an estimated time for writing the second data into the second region, when the first region and the second region are not continuous; calculating a second estimated time for writing third data including the first data, the second data, and additional data to be written into a gap region into a third region including the first region, the second region, and the gap region between the first region and the second region; and performing a control to write the first data, the second data, and the additional data into the memory region at a time, when the second estimated time is shorter than the first estimated time.

Moreover, in order to solve the above problem, a write control apparatus is provided. The write control apparatus includes an acquisition unit that acquires a write request for writing first data into a first region in a memory region of a memory device and a write request for writing second data into a second region; a first calculation unit that calculates a first estimated time by summing an estimated time for writing the first data into the first region and an estimated time for writing the second data into the second region, when the first region and the second region are not continuous; a second calculation unit that calculates a second estimated time for writing third data including the first data, the second data, and additional data to be written into a gap region into a third region including the first region, the second region, and the gap region between the first region and the second region; and a write control unit that performs a control to write the first data, the second data, and the additional data in the memory region at a time, when the second estimated time is shorter than the first estimated time.

Furthermore, in order to solve the above problem, a write control method in which a computer performs the following procedure is provided. In the write control method, a computer executes a procedure including: acquiring a write request for writing first data into a first region in a memory region of a memory device and a write request for writing second data into a second region; calculating a first estimated time by summing an estimated time for writing the first data into the first region and an estimated time for writing the second data into the second region, when the first region and the second region are not continuous; calculating a second estimated time for writing third data including the first data, the second data, and additional data to be written into a gap region into a third region including the first region, the second region, and the gap region between the first region and the second region; and performing a control to write the first data, the second data, and the additional data into the memory region at a time, when the second estimated time is shorter than the first estimated time.

### Advantageous Effects of Invention

According to the write control program, the write control apparatus, and the write control method, the data write speed is improved.

The aforementioned and other objects, features, and advantages of the present disclosure will be obvious from the following description with reference to appended drawings of preferable exemplary embodiments of the present disclosure.

### Brief Description of Drawings

[FIG. 1] FIG. 1 illustrates a configuration of a write control apparatus in a first embodiment.
[FIG. 2] FIG. 2 illustrates an example of a configuration of a tag issuance system in a second embodiment.
[FIG. 3] FIG. 3 illustrates an example of a hardware configuration of a tag issuance control apparatus in the second embodiment.
[FIG. 4] FIG. 4 illustrates functional blocks of the tag issuance control apparatus in the second embodiment.
[FIG. 5] FIG. 5 illustrates an example of write data information in the second embodiment.
[FIG. 6] FIG. 6 illustrates an example of a performance table in the second embodiment.
[FIG. 7] FIG. 7 illustrates an example of a data-addition prohibited region table in the second embodiment.
[FIG. 8] FIG. 8 illustrates an example of en bloc write determination in the second embodiment.
[FIG. 9] FIG. 9 illustrates an example of generation of new write data information by coupling two sets of write data information in the second embodiment.
[FIG. 10] FIG. 10 is a flowchart of a tag issuance process in the second embodiment.
[FIG. 11] FIG. 11 is a flowchart of a write process in the second embodiment.

### Description of Embodiments

In the following, embodiments of the present disclosure will be described with reference to the drawings.

### [First Embodiment]

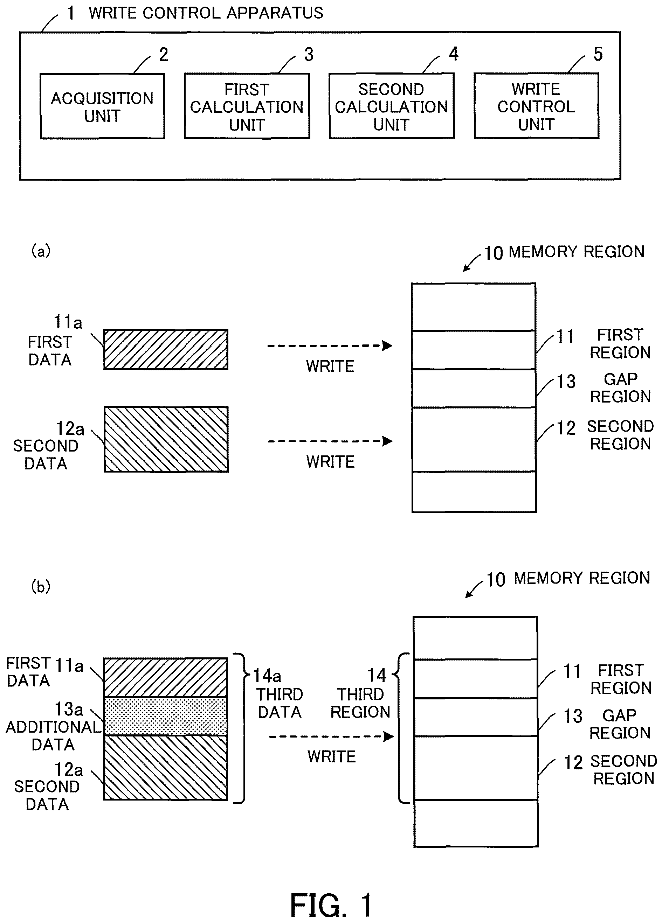

FIG. 1 illustrates a configuration of a write control apparatus of a first embodiment. The write control apparatus 1 controls data write into a memory region 10 of a memory device. The memory device is an integrated circuit (IC) chip provided in a tag used in an RFID system, for example. The write control apparatus 1 includes an acquisition unit 2, a first calculation unit 3, a second calculation unit 4, and a write control unit 5.

The acquisition unit 2 acquires a write request for writing first data 11a into a first region 11 in the memory region 10 of the memory device. The first region 11 is a continuous region having continuous physical addresses (hereinafter, referred to as addresses). That is, the first data 11a is written into the continuous region in single write processing.

In addition, the acquisition unit 2 acquires a write request for writing second data 12a into a second region 12 in the memory region 10 of the memory device. The second region 12 is a continuous region having continuous addresses. That is, the second data 12a is written into the continuous region in single write processing.

Note that each of the first data 11a and the second data 12a is written into the continuous regions, may be one write data unit, and may also be two or more write data units (a collection of write data units) to be written into continuous addresses.

The write data unit is to be written in single write processing and is separated for each content unit (meaning unit) to be written, for example.

The first calculation unit 3 calculates a first estimated time when the first region 11 and the second region 12 are not continuous, that is, when the address of the write end position of the first region 11 and the address of the write start position of the second region 12 are not continuous but away from each other in the memory region 10. As illustrated in FIG. 1(a), the first estimated time is an estimated value of a time for performing both of the write of the first data 11a into the first region 11 and the write of the second data 12a into the second region 12. The first estimated time is calculated by summing an estimated value of a time for writing the first data 11a into the first region 11 and an estimated value of a time for writing the second data 12a into the second region 12.

The second calculation unit 4 calculates a second estimated time. As illustrated in FIG. 1(b), the second estimated time is an estimated value of a time for writing third data 14a into a third region 14. The third region 14 includes the first region 11, the second region 12, and a gap region 13, which have continuous addresses.

The gap region 13 is an interposed region between the first region 11 and the second region 12, and is adjacent to the first region 11 and the second region 12. That is, the gap region 13 is continuous to the first region 11 at one end, and is continuous to the second region 12 at the other end.

The third data 14a includes the first data 11a, the second data 12a, and additional data 13a. The additional data 13a is written into the gap region 13 (the region between the first region 11 for the first data 11a and the second region 12 for the second data 12a). For example, the additional data 13a is dummy data or an initial value (for example, 0).

The write control unit 5 controls data write into the memory region 10. When the second estimated time is shorter than the first estimated time, the write control unit 5 performs a control to write the first data 11a, the second data 12a, and the additional data 13a at a time (in single write processing). That is, the write control unit 5 performs a control to write the third data 14a into the third region 14.

If the second estimated time is shorter than the first estimated time, the write control apparatus 1 writes data at a higher speed (in a shorter time) by writing the first data 11a, the second data 12a, and the additional data 13a at a time than by writing the first data 11a and the second data 12a separately. That is, when the second estimated time is shorter than the first estimated time, the write control apparatus 1 writes the first data 11a and the second data 12a into the memory region 10 at a higher speed, by performing a control to write the first data 11a, the second data 12a, and the additional data 13a at a time.

Thereby, the write control apparatus 1 improves the write speed (shortens the write time) for writing the two data sets (the first data 11a and the second data 12a) into the separate regions in the memory region 10.

### [Second Embodiment]

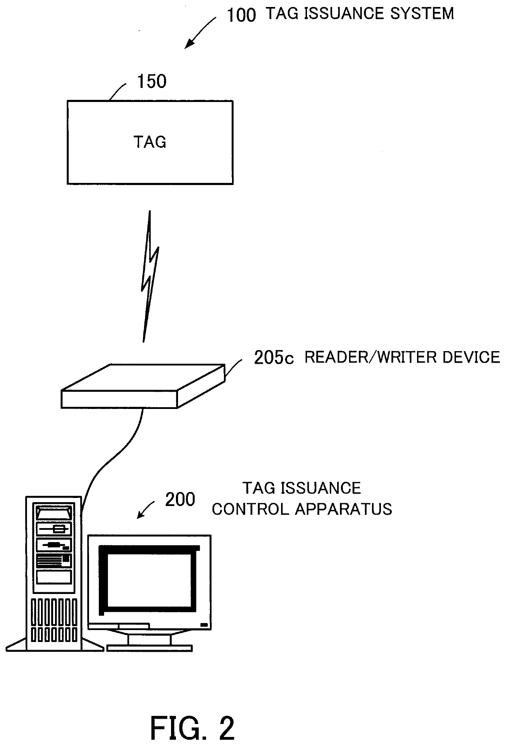

Next, the write control apparatus of the first embodiment will be described more specifically as a second embodiment. FIG. 2 illustrates a configuration example of a tag issuance system in the second embodiment.

The tag issuance system 100 issues a tag 150 by writing data into the tag 150 for use in the RFID system for managing items, persons entering and leaving a room, etc. (i.e. sets the tag 150 in a usable state in the RFID system).

The tag issuance system 100 includes a tag issuance control apparatus 200, a reader/writer device (an RFID reader/writer) 205c, and the tag 150 capable of wireless communication with the reader/writer device 205c.

The tag 150 is used in the RFID system and contains an IC chip (a memory device) and an antenna for wireless communication. The IC chip has a memory region from which data is read and into which data is written by wireless communication.

The tag issuance control apparatus 200 accepts an input of tag issuance information from a higher level device or an operator, and controls tag issuance processing on the basis of the accepted tag issuance information. The tag issuance information is relevant to the processing performed to issue the tag 150, and includes information relevant to data (hereinafter, referred to as a write data set) to be written into the tag 150 and information relevant to a memory region to be locked (restricted in rewrite) (hereinafter, referred to as a lock region). The write data is used in the RFID system. The write data is a data unit to be written into a continuous region having continuous addresses in the memory region by a single write (command).

The tag issuance process is a process for issuing the tag 150 by writing the write data set into the tag 150 and locking the lock region of the tag 150. The tag issuance control apparatus 200 is an example of the write control apparatus. In the following description, it is assumed that the tag issuance control apparatus 200 accepts an input of tag issuance information from the operator.

The reader/writer device 205c writes the write data set into the tag 150 and locks the lock region of the tag 150 in accordance with an instruction of the tag issuance control apparatus 200.

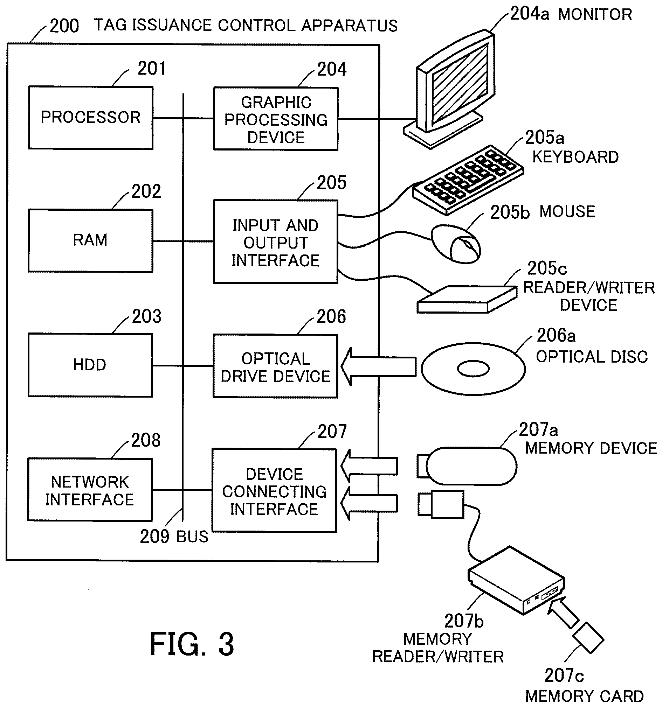

Next, a hardware configuration of the tag issuance control apparatus 200 will be described. FIG. 3 illustrates an example of the hardware configuration of the tag issuance control apparatus in the second embodiment.

The entire tag issuance control apparatus 200 is controlled by a processor 201. A random access memory (RAM) 202 and a plurality of peripheral devices are connected to the processor 201 via a bus 209. The processor 201 may be a multiprocessor. The processor 201 is a central processing unit (CPU), a micro processing unit (MPU), a digital signal processor (DSP), an application specific integrated circuit (ASIC), or a programmable logic device (PLD), for example. Also, the processor 201 may be a combination of two or more elements of a CPU, an MPU, a DSP, an ASIC, and a PLD.

The RAM 202 is used as a main memory device of the tag issuance control apparatus 200. At least a part of operating system (OS) programs and application programs executed in the processor 201 is temporarily stored in the RAM 202. In addition, various types of data for use in processing in the processor 201 are stored in the RAM 202.

The peripheral devices connected to the bus 209 include a hard disk drive (HDD) 203, a graphic processing device 204, an input and output interface 205, an optical drive device 206, a device connecting interface 207, and a network interface 208.

The HDD 203 magnetically writes data into and reads data from an internal disk. The HDD 203 is used as an auxiliary memory device of the tag issuance control apparatus 200. The OS programs, the application programs, and various types of data are stored in the HDD 203. Note that the auxiliary memory device may be a semiconductor memory device, such as a flash memory.

A monitor 204a is connected to the graphic processing device 204. The graphic processing device 204 displays an image on the screen of the monitor 204a in accordance with a command from the processor 201. The monitor 204a is a display device using a cathode ray tube (CRT) or a liquid crystal display device, for example.

A keyboard 205a, a mouse 205b, and the reader/writer device 205c are connected to the input and output interface 205. The input and output interface 205 supplies to the processor 201 a signal sent from the keyboard 205a, the mouse 205b, and the reader/writer device 205c. Also, the input and output interface 205 supplies to the reader/writer device 205c a signal sent from the processor 201.

Note that the mouse 205b is an example of a pointing device and other pointing devices may be employed. The other pointing devices are, for example, a touch panel, a tablet, a touch pad, and a trackball. Note that the reader/writer device 205c need a data write function but need not include a data read function.

The optical drive device 206 reads data from an optical disc 206a, by utilizing laser light or the like. The optical disc 206a is a portable storage medium in which data is recorded in a readable manner by reflection of light. The optical disc 206a is a digital versatile disc (DVD), a DVD-RAM, a compact disc read only memory (CD-ROM), or a CD-R(Recordable)/RW(ReWritable), for example.

The device connecting interface 207 is a communication interface for connecting peripheral devices to the tag issuance control apparatus 200. For example, a memory device 207a and a memory reader/writer 207b are connected to the device connecting interface 207. The memory device 207a is a storage medium having a communication function with the device connecting interface 207. The memory reader/writer 207b writes data into a memory card 207c and reads data from the memory card 207c. The memory card 207c is a card storage medium.

The network interface 208 is connected to a network. The network interface 208 transmits data to and receives data from another computer (for example, a higher level device) or a communication device via the network.

The processing function of the second embodiment is implemented by the above hardware configuration. Note that the device illustrated in the first embodiment can be implemented by the same hardware as the tag issuance control apparatus 200 illustrated in FIG. 3. Although the tag issuance control apparatus 200 and the reader/writer device 205c have been described as different devices, one apparatus may have a function for performing the processing of the tag issuance control apparatus 200 and the reader/writer device 205c.

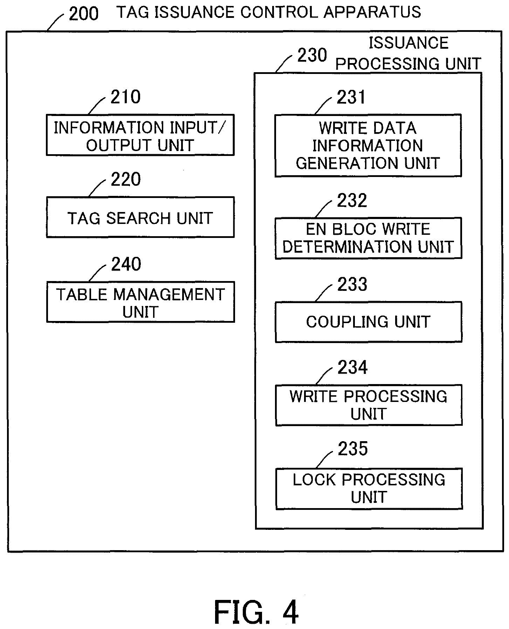

Next, the function of the tag issuance control apparatus 200 will be described with reference to FIG. 4. FIG. 4 illustrates functional blocks of the tag issuance control apparatus 200 in the second embodiment.

The tag issuance control apparatus 200 includes an information input/output unit 210, a tag search unit 220, an issuance processing unit 230, and a table management unit 240.

The information input/output unit 210 accepts an input of information from the operator, and outputs information to the operator. The information input/output unit 210 accepts an input of tag issuance information or the like.

The tag search unit 220 performs a control to search for the tag 150. Tag identifying information stored in advance in the IC chip of the tag 150 is used in search for the tag 150, for example. The tag identifying information is a tag identifier (TID) or an electronic product code (EPC), for example.

The issuance processing unit 230 controls processing for issuing the tag 150 (writing a write data set into the tag 150 and locking the lock region of the tag 150) on the basis of tag issuance information and tables managed by the table management unit 240.

The issuance processing unit 230 includes a write data information generation unit 231, an en bloc write determination unit 232, a coupling unit 233, a write processing unit 234, and a lock processing unit 235.

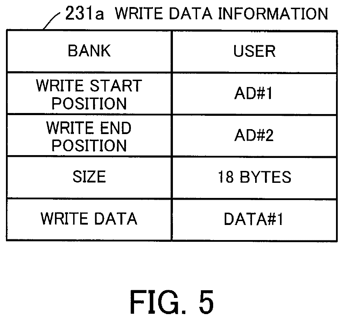

The write data information generation unit 231 generates write data information relevant to a write data set, on the basis of the tag issuance information accepted from the operator. The write data information is used in controlling the write of the write data set and is generated for each write data set. The write data information is used to instruct (issue a command for) the reader/writer device 205c to write the write data set. The write data information includes a write data set, a region (hereinafter, referred to as a write region) into which the write data is written, and a size of the write data, which are associated with each other. Here, the write data information will be described with reference to FIG. 5.

FIG. 5 illustrates an example of the write data information in the second embodiment.

The write data information 231a includes fields of bank, write start position, write end position, size, and write data set.

The field of bank stores information indicating a bank name for which a write data set is written. The bank is classification in the memory region of the IC chip. For example, the memory region of the tag is classified into four banks including EPC bank, TID bank, user bank, and reserved bank.

The field of write start position stores information (an address in a bank) indicating a start position from which a write data set is written. The field of write end position stores information (an address in a bank) indicating an end position to which the write data set is written. Thus, the write region for writing the write data set is uniquely identified by the bank, the write start position, and the write end position of the write data information 231a.

The field of size stores information indicating the size of the write data set. The field of write data stores the write data set (data contents) to be written into the tag 150.

For example, the write data information 231a stores "USER" in the field of bank, "AD#1" in the field of write start position, "AD#2" in the field of write end position, "18 bytes" in the field of size, and "DATA#1" in the field of write data.

This indicates that the write data information 231a is relevant to "DATA#1" to be written into the tag 150, and that the size of "DATA#1" is "18 bytes". In addition, this indicates that "DATA#1" is written into the 18-byte region from "AD#1" to "AD#2" of the "USER" bank. The description returns to FIG. 4.

The en bloc write determination unit 232 performs determination (hereinafter, referred to as en bloc write determination) of whether or not to perform en bloc (collective) write of two write data sets. When determining that two write data sets are written at a higher speed (in a short time) if the two write data sets are written at a time (en bloc), the en bloc write determination unit 232 determines to perform en bloc write. En bloc write determination is performed when two write data sets are written into the same bank.

The en bloc write determination unit 232 determines to write two write data sets at a time, when write regions of the two write data sets are continuous.

When the write regions of the two write data sets are not continuous, the en bloc write determination unit 232 calculates a separate write time and an en bloc write time by using the tables of the table management unit 240 described later. The separate write time is a time that it takes to write the two write data sets separately. The en bloc write time is a time that it takes to write the two write data sets at a time. The en bloc write determination unit 232 performs en bloc write determination by comparing the separate write time with the en bloc write time.

Note that the en bloc write determination unit 232 calculates the individual times that it takes to write the write data sets (hereinafter, referred to as write times), and calculates the separate write time by summing the individual times.

Moreover, the en bloc write determination unit 232 calculates the en bloc write time on the basis of a write time for data of the same size as the region obtained by summing the two write regions and a region between the two write regions (hereinafter, referred to as a gap region). That is, the en bloc write determination unit 232 calculates the en bloc write time on the basis of a write time for data of the same size as a region from the write start position of a write region positioned in front to the write end position of a write region positioned in the rear in the memory region.

When the en bloc write is determined to be performed, the coupling unit 233 couples the two write data sets to generate a new write data set. In addition, the coupling unit 233 generates write data information relevant to the new write data set, on the basis of the write data information relevant to the coupled two write data sets.

When the write regions of the two write data sets are continuous, the coupling unit 233 couples the two write data sets to generate a new write data set. On the other hand, when the write regions of the two write data sets are not continuous (away from each other), the coupling unit 233 couples the two write data sets and an additional data set (for example, dummy data or an initial value) to generate a new write data set. The additional data is used to generate the new write data set to be written into a continuous region from the two write data sets whose write regions are away from each other, and is written into the gap region. In the following description, the additional data set is assumed to be dummy data.

The write processing unit 234 controls write of a write data set. The write processing unit 234 issues a command to the reader/writer device 205c on the basis of the write data information, and causes the reader/writer device 205c to write the write data set into the tag 150.

The lock processing unit 235 controls locking of a lock region. The lock processing unit 235 issues a command to the reader/writer device 205c on the basis of the tag issuance information, and causes the reader/writer device 205c to lock the lock region.

The table management unit 240 manages various types of tables used in issuance processes. The table management unit 240 manages a performance table for calculating a separate write time and an en bloc write time and a data-addition prohibited region table for determining whether or not en bloc write determination is to be performed.

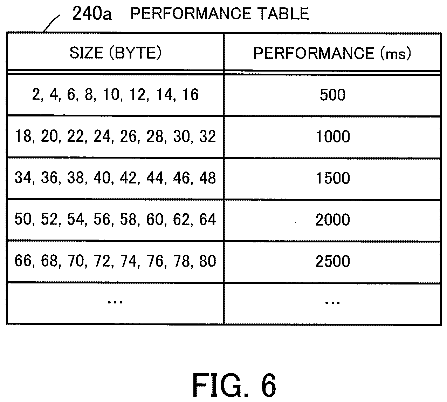

Here, a performance table managed by the table management unit 240 will be described with reference to FIG. 6. FIG. 6 illustrates an example of a performance table 240a in the second embodiment.

The performance table 240a is managed by the table management unit 240. The performance table 240a is used in calculation of the separate write time and the en bloc write time.

The performance table 240a includes fields of size (byte) and performance (ms). The field of size stores data size. The field of size stores values that can be sizes of write data sets. In general, sizes of data written into the tag change by two bytes, like (2, 4, 6, ..., 2n), and thus the field of size stores even number bytes that can be the sizes of the write data sets. The field of performance stores the write time according to the size.

For example, the performance table 240a stores "2, 4, 6, 8, 10, 12, 14, 16 (2 to 16)" in the field of size, and "500" in the field of performance. This indicates that it takes "500" ms to write the data of "2, 4, 6, 8, 10, 12, 14, 16 (2 to 16)" bytes.

With this performance table 240a, the en bloc write determination unit 232 calculates write times of the respective write data sets on the basis of size information included in the respective write data information, in order to calculate the separate write time. With the performance table 240a, the en bloc write determination unit 232 calculates the en bloc write time by identifying the size of a region from the write start position of one write region positioned in front to the write end position of the other write region positioned in the rear in the memory region.

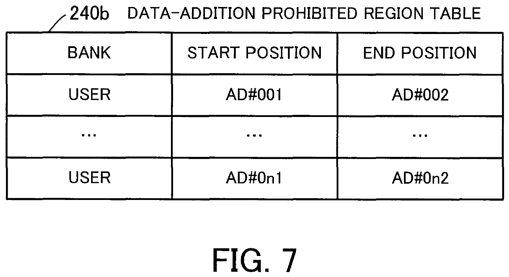

Next, a data-addition prohibited region table managed by the table management unit 240 will be described with reference to FIG. 7. FIG. 7 illustrates an example of the data-addition prohibited region table in the second embodiment.

The data-addition prohibited region table 240b is managed by the table management unit 240. The data-addition prohibited region table 240b is used to determine whether or not en bloc write is executable, in order to determine whether or not en bloc write determination is to be performed.

The data-addition prohibited region table 240b indicates data-addition prohibited regions in which write of dummy data (addition of an additional data set) is prohibited. The data-addition prohibited regions include a region that is writable only once and non-rewritable (write-at-once region), for example.

When there is a data-addition prohibited region in a gap region between two write data sets, an additional data set is unable to be added in the gap region, and thus the en bloc write determination unit 232 determines that en bloc write is non-executable and that the en bloc write determination is not to be performed. The data-addition prohibited region differs in position, depending on the type of the tag (i.e. information specific to the tag), and thus the table management unit 240 manages a data-addition prohibited region table for each type of the tag.

The data-addition prohibited region table 240b includes fields of bank, start position, and end position. The field of bank stores bank names. The field of start position stores information indicating start positions (addresses in the bank). The field of end position stores information indicating end positions (addresses in the bank).

For example, the data-addition prohibited region table 240b stores "USER" in the field of bank, "AD#001" in the field of start position, and "AD#002" in the field of end position. This indicates that addition of dummy data is prohibited between "AD#001" and "AD#002" of the "USER" bank.

With this data-addition prohibited region table 240b, the en bloc write determination unit 232 determines whether an addition prohibited region is included in a gap region on the basis of write data information of two write data sets. Thereby, the en bloc write determination unit 232 determines whether or not en bloc write determination is to be performed.

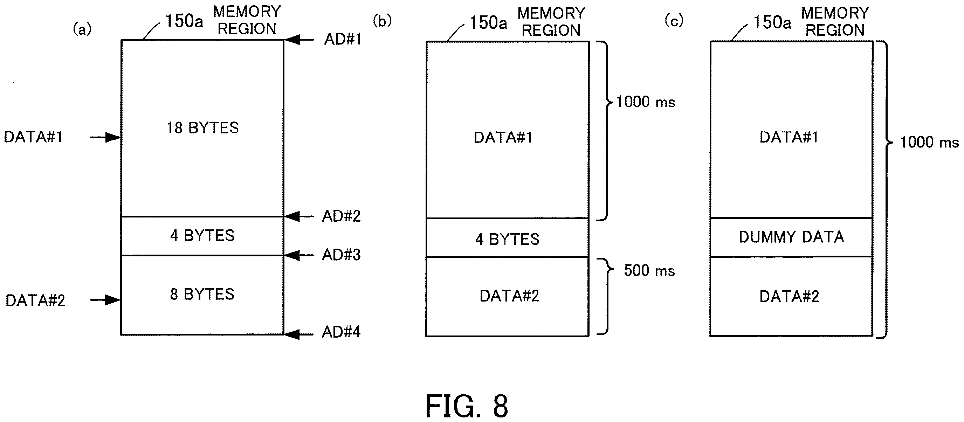

Next, a specific example of en bloc write determination will be described with reference to FIG. 8. FIG. 8 illustrates an example of en bloc write determination in the second embodiment. In the following description, it is assumed that two write data sets are away from each other.

First, an overview will be described with reference to FIG. 8(a). The memory region 150a illustrates a part of the memory region of the IC chip of the tag 150. "DATA#1" of 18 bytes is written into the 18-byte region from "AD#1" to "AD#2" of the memory region 150a. Also, "DATA#2" of 8 bytes is written into the 8-byte region from "AD#3" to "AD#4" of the memory region 150a.

In this case, the en bloc write determination unit 232 calculates, as a separate write time, a summation of times that it takes to separately write "DATA#1" into "AD#1" to "AD#2" and "DATA#2" into "AD#3" to "AD#4", as illustrated in FIG. 8(b). That is, the en bloc write determination unit 232 calculates the separate write time (1500 ms) by summing the write time (1000 ms) of the 18-byte data and the write time (500 ms) of the 8-byte data, with reference to the performance table 140a.

Further, the en bloc write determination unit 232 calculates, as an en bloc write time, a time that it takes to write "DATA#1", "dummy data", and "DATA#2" into "AD#1" to "AD#4" at a time, as illustrated in FIG. 8(c). That is, the en bloc write determination unit 232 calculates the en bloc write time (1000 ms) on the basis of the write time of the data of the same size as the region from "AD#1" to "AD#4" (the data of 30 bytes), with reference to the performance table 140a.

Thereafter, the en bloc write determination unit 232 compares the separate write time (1500 ms) with the en bloc write time (1000 ms), and determines to perform en bloc write.

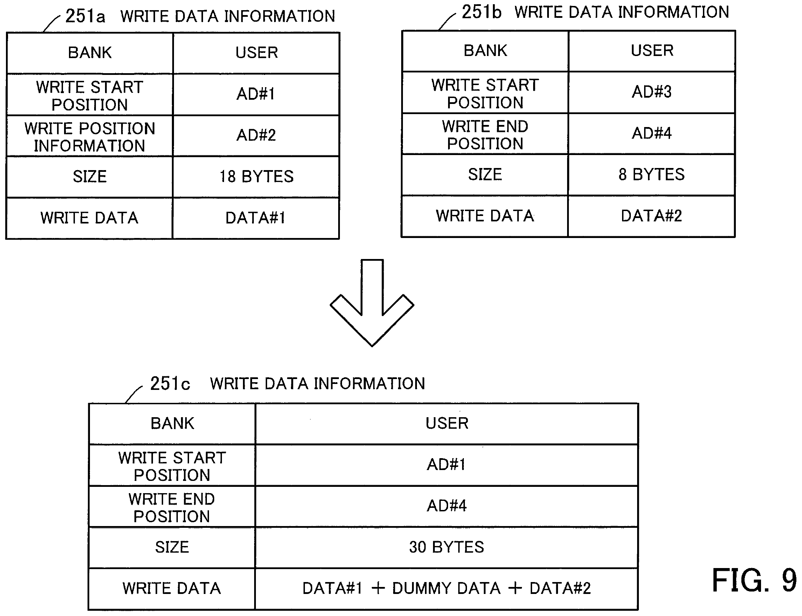

Next described is a specific example of generation of a new write data set by coupling "DATA#1" and "DATA#2" which have been determined to be written at a time in the specific example illustrated in FIG. 8 and generation of write data information relevant to the new write data set. FIG. 9 illustrates an example of generation of new write data information by coupling two sets of write data information in the second embodiment.

The write data information 251a is relevant to "DATA#1". The write data information 251a indicates that "DATA#1" is an 18-byte write data set to be written into the 18-byte region from "AD#1" to "AD#2" in a "USER" bank.

The write data information 251b is relevant to "DATA#2". The write data information 251b indicates that "DATA#2" is an 8-byte write data set to be written into the 8-byte region from "AD#3" to "AD#4" in the "USER" bank.

The coupling unit 233 couples "DATA#1", "DATA#2", and 4-byte "dummy data" to be written into the gap region between the write regions of the two write data sets, in order to generate a new write data set ("DATA#1 + dummy data + DATA#2").

Then, the coupling unit 233 couples the write data information 251a and the write data information 251b in order to generate write data information 251c relevant to the new write data set ("DATA#1 + dummy data + DATA#2").

The field of bank of the write data information 251c stores "USER", which is stored in the bank fields of the write data information 251a and the write data information 251b.

The field of write start position stores "AD#1" which is the write start position information of the write region positioned in front in the memory region, among the information stored in the fields of write start position of the write data information 251a and the write data information 251b.

The field of write end position stores "AD#4" which is the write end position information of the write region positioned in the rear in the memory region, among the information stored in the fields of write end position of the write data information 251a and the write data information 251b.

The field of size of the write data information 251c stores the size of the region from the write start position to the write end position (the size of the region from AD#1 to AD#4).

The field of write data of the write data information 251c stores "DATA#1 + dummy data + DATA#2" obtained by coupling the two write data sets and the 4-byte dummy data to be written between the two write data sets.

In this way, when en bloc write is performed, the coupling unit 233 generates the new write data set on the basis of the two write data sets, and generates the write data information relevant to the new write data set on the basis of the write data information relevant to the two write data sets.

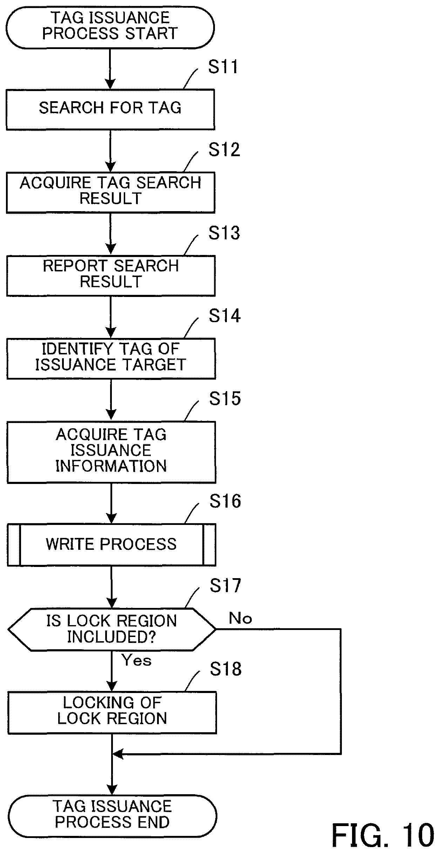

Next, a sequence of a tag issuance process will be described with reference to FIG. 10. FIG. 10 is a flowchart of the tag issuance process in the second embodiment.

[Step S11] The tag search unit 220 causes the reader/writer device 205c to search for the tag 150.

[Step S12] The tag search unit 220 acquires a search result (tag identifying information) of the tag 150 from the reader/writer device 205c.

[Step S13] The information input/output unit 210 reports the search result of the tag 150 to the operator.

[Step S14] The information input/output unit 210 accepts from the operator an instruction of the tag 150 to be issued in order to identify the tag 150 of an issuance target.

[Step S15] The information input/output unit 210 accepts an input of tag issuance information from the operator, in order to acquire the tag issuance information.

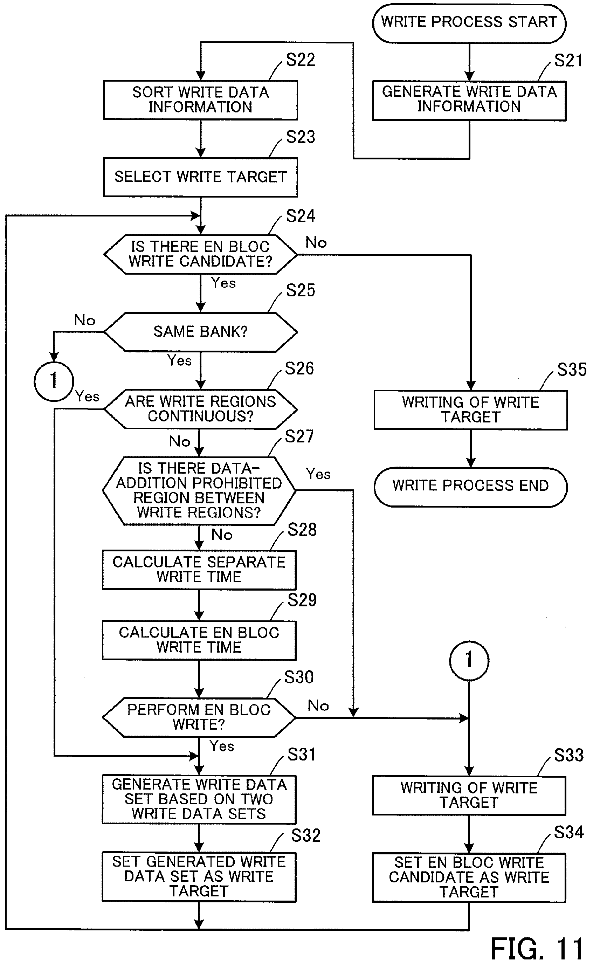

[Step S16] The issuance processing unit 230 performs a write process of a write data set. The issuance processing unit 230 is a process to write the write data set into the tag 150 on the basis of the tag issuance information and the tables managed by the table management unit 240. The write process will be described in detail later with reference to FIG. 11.

[Step S17] The lock processing unit 235 determines whether or not the tag issuance information includes information relevant to a lock region. The process proceeds to step S18 if the lock processing unit 235 determines that the information relevant to a lock region is included, and ends the tag issuance process if the lock processing unit 235 determines that the information relevant to a lock region is not included.

[Step S18] The lock processing unit 235 causes the reader/writer device 205c to lock the lock region, and ends the tag issuance process.

Next, a write process will be described with reference to FIG. 11. FIG. 11 is a flowchart of the write process in the second embodiment. The write process is performed in step S16 of the tag issuance process.

[Step S21] The write data information generation unit 231 generates write data information relevant to the write data set to be written into the tag 150 in the tag issuance process, on the basis of the tag issuance information accepted from the operator.

[Step S22] The en bloc write determination unit 232 sorts the generated write data information on the basis of the write region indicated by each write data information. The en bloc write determination unit 232 sorts (arranges in order) the generated write data information, in such a manner that the positions of the write regions indicated by the write data information are arranged in the order from the front in the memory region.

[Step S23] The en bloc write determination unit 232 selects, as a write target (corresponding to the first data), the write data set to be written into the very

front in the memory region (the write data indicated by the first write data information in the order) among the write data sets to be written in the tag issuance process.

[Step S24] The en bloc write determination unit 232 determines whether or not there is a write data set to be written with the selected write target at a time (hereinafter, an en bloc write candidate (corresponding to the second data)). The en bloc write candidate is a write data set to be written into a region positioned in the rear of the write target.

If there is write data information arranged subsequent to the write data information relevant to the write target, the en bloc write determination unit 232 determines that there is an en bloc write candidate.

If the en bloc write determination unit 232 determines that there is an en bloc write candidate, the en bloc write determination unit 232 specifies the write data indicated by the write data information arranged subsequent to the write data information relevant to the write target as the en bloc write candidate, and the process proceeds to step S25. If the en bloc write determination unit 232 determines that there is no en bloc write candidate, the process proceeds to step S35.

[Step S25] The en bloc write determination unit 232 determines whether or not the write target and the en bloc write candidate are written into the same bank. The process proceeds to step S26 if the en bloc write determination unit 232 determines that the write target and the en bloc write candidate are written into the same bank, and proceeds to step S33 if the en bloc write determination unit 232 determines that the write target and the en bloc write candidate are written into different banks.

[Step S26] The en bloc write determination unit 232 determines whether or not the write region of the write target and the write region of the en bloc write candidate are continuous. Specifically, the en bloc write determination unit 232 determines whether or not the two write regions are continuous, on the basis of the write end position of the write target and the write start position of the en bloc write candidate.

The process proceeds to step S31 if the en bloc write determination unit 232 determines that the write region of the write target and the write region of the en bloc write candidate are continuous, and proceeds to step S27 if the en bloc write determination unit 232 determines that the write region of the write target and the write region of the en bloc write candidate are not continuous.

[Step S27] The en bloc write determination unit 232 determines whether or not an addition prohibited region exists (is positioned) in a gap region between the write region of the write target and the write region of the en bloc write candidate. Specifically, the en bloc write determination unit 232 determines whether an addition prohibited region exists in the gap region, on the basis of the write end position of the write target, the write start position of the en bloc write candidate, and the data-addition prohibited region table 140b.

The process proceeds to step S33 if the en bloc write determination unit 232 determines that an addition prohibited region exists in the gap region, and proceeds to step S28 if the en bloc write determination unit 232 determines that there is no addition prohibited region.

[Step S28] The en bloc write determination unit 232 calculates a separate write time. The en bloc write determination unit 232 calculates a write time of the write target on the basis of the size of the write target and the performance table 140a. In addition, the en bloc write determination unit 232 calculates a write time of the en bloc write candidate on the basis of the size of the en bloc write candidate and the performance table 140a. The en bloc write determination unit 232 calculates a separate write time by summing the write time of the write target and the write time of the en bloc write candidate.

[Step S29] The en bloc write determination unit 232 calculates an en bloc write time. The en bloc write determination unit 232 identifies the size of a region in which data is written by en bloc write (the size of data to be written by en bloc write) on the basis of the write start position of the write target and the write end position of the en bloc write candidate. This region size includes the size of a gap region between the write region of the write target and the write region of the en bloc write candidate. The en bloc write determination unit 232 calculates the en bloc write time on the basis of the identified size and the performance table 140a.

[Step S30] The en bloc write determination unit 232 compares the separate write time with the en bloc write time, and determines whether or not to perform en bloc write. If the en bloc write time is shorter than the separate write time, the en bloc write determination unit 232 determines to perform en bloc write.

The process proceeds to step S31 if the en bloc write determination unit 232 determines to perform en bloc write, and proceeds to step S33 if the en bloc write determination unit 232 determines not to perform en bloc write.

[Step S31] The coupling unit 233 generates a new write data set on the basis of the two write data sets (the write target and the en bloc write candidate). In addition, the coupling unit 233 generates write data information relevant to the new write data set on the basis of the write data information relevant to the write target and the write data information relevant to the en bloc write candidate.

[Step S32] The en bloc write determination unit 232 sets the new write data set as the next write target, and the process returns to step S24.

[Step S33] The write processing unit 234 causes the reader/writer device 205c to write the write target into the tag 150 on the basis of the write data information relevant to the write target.

[Step S34] Upon completion of writing the write target into the tag 150, the en bloc write determination unit 232 sets the en bloc write candidate as the next write target, and the process returns to step S24.

[Step S35] The write processing unit 234 causes the reader/writer device 205c to write the write target into the tag 150 on the basis of the write data information relevant to the write target, and ends the write process.

The tag issuance control apparatus 200 in the second embodiment has been described. As described above, when two write data sets are written in the same bank, using dummy data enables the tag issuance control apparatus 200 to determine whether or not the two write data sets are written at a higher speed by en bloc write, regardless of whether or not write regions of the two write data sets are continuous.

Then, when determining that the two write data sets are written at a higher speed by writing the two write data sets at a time, the tag issuance control apparatus 200 performs control to write the two write data sets at a time (en bloc).

Thereby, the tag issuance control apparatus 200 improves write speed (shortens write time) for writing the two write data sets into a memory region, even when the write regions of the two write data sets are not continuous in the same bank in the memory region.

The above processing function is implemented by a computer. In that case, a program describing a processing procedure of functions to be installed in an apparatus is provided. By executing the program in a computer, the above processing function is implemented in the computer. The program describing the processing procedure may be stored in a computer-readable storage medium. The computer-readable storage medium is, for example, a magnetic memory device, an optical disc, a magneto-optical storage medium, or a semiconductor memory. The magnetic memory device is a hard disk device (HDD), a flexible disk, a magnetic tape, or the like. The optical disc is a DVD, a DVD-RAM, a CD-ROM/RW, or the like. The magneto-optical storage medium is a magneto-optical disk (MO) or the like.

When a program is put on the market, a portable storage medium, such as a DVD and a CD-ROM, having the program stored therein is sold, for example. Also, a program may be stored in a memory device of a server computer and be transmitted from the server computer to other computers via a network.

A computer reads a program stored in a portable storage medium or receives a program transmitted from a server computer, and stores the program in a memory device of the computer, in order to execute the program, for example. Then, the computer reads the program from its own memory device and performs processing in accordance with the program. Note that the computer may read the program directly from a portable storage medium and perform processing in accordance with the program. Also, the computer may perform processing in accordance with a program, each time a program is transmitted from a server computer via a network.

Also, at least a part of the above processing function may be implemented by an electronic circuit, such as a DSP, an ASIC, and a PLD.

The above just illustrates the principle of the present disclosure. Further, a person skilled in the art will make various modifications and alterations, and the embodiments are not exactly limited to the configurations and applications illustrated and described above, but encompasses all corresponding variants and equivalents thereof in the scope of the appended claims and equivalents thereof.

### Reference Signs List

1 write control apparatus
2 acquisition unit
3 first calculation unit
4 second calculation unit
5 write control unit
10 memory region
11 first region
11a first data
12 second region
12a second data
13 gap region
13a additional data
14 third region
14a third data

## Claims

1. A computer program for write control, the computer program causing a computer to perform a procedure comprising:
acquiring a write request for writing first data into a first region in a memory region of a memory device and a write request for writing second data into a second region;
calculating a first estimated time by summing an estimated time for writing the first data into the first region and an estimated time for writing the second data into the second region, when the first region and the second region are not continuous;
calculating a second estimated time for writing third data including the first data, the second data, and additional data to be written into a gap region into a third region including the first region, the second region, and the gap region between the first region and the second region; and
performing a control to write the first data, the second data, and the additional data into the memory region at a time, when the second estimated time is shorter than the first estimated time.

2. The computer program for write control according to claim 1, wherein the procedure further comprising:
performing a control to write the first data and the second data separately, when the second estimated time is longer than the first estimated time.

3. The computer program for write control according to claim 1, wherein
the first estimated time is calculated by calculating the estimated time for writing the first data into the first region on the basis of a size of the first data and calculating the estimated time for writing the second data into the second region on the basis of a size of the second data, and
the second estimated time is calculated on the basis of a size of the third data.

4. The computer program for write control according to claim 2, wherein
the first estimated time and the second estimated time are calculated with reference to information that associates a size of data to be written and a write time for writing data having the size.

5. The computer program for write control according to claim 2, wherein
a size of the third data is a sum of a size of the first region, a size of the second region, and a size of the gap region.

6. The computer program for write control according to claim 1, wherein the procedure further comprising:
performing a control to write the first data and the second data separately, when an addition prohibited region in which addition of the additional data is prohibited is positioned in the gap region.

7. The computer program for write control according to claim 1, wherein the procedure further comprising:
performing a control to write the first data and the second data at a time, when the first region and the second region are continuous.

8. A write control apparatus comprising:
an acquisition unit that acquires a write request for writing first data into a first region in a memory region of a memory device and a write request for writing second data into a second region;
a first calculation unit that calculates a first estimated time by summing an estimated time for writing the first data into the first region and an estimated time for writing the second data into the second region, when the first region and the second region are not continuous;
a second calculation unit that calculates a second estimated time for writing third data including the first data, the second data, and additional data to be written into a gap region into a third region including the first region, the second region, and the gap region between the first region and the second region; and
a write control unit that performs a control to write the first data, the second data, and the additional data in the memory region at a time, when the second estimated time is shorter than the first estimated time.

9. A write control method executed by a computer, the write control method comprising:
acquiring a write request for writing first data into a first region in a memory region of a memory device and a write request for writing second data into a second region;
calculating a first estimated time by summing an estimated time for writing the first data into the first region and an estimated time for writing the second data into the second region, when the first region and the second region are not continuous;
calculating a second estimated time for writing third data including the first data, the second data, and additional data to be written into a gap region into a third region including the first region, the second region, and the gap region between the first region and the second region; and
performing a control to write the first data, the second data, and the additional data into the memory region at a time, when the second estimated time is shorter than the first estimated time.
